# EUROPÄISCHE PATENTSCHRIFT

(11) **EP 3 268 174 B1**
(45) Veröffentlichungstag und Bekanntmachung des Hinweises auf die Patenterteilung: **29.04.2020**
(21) Anmeldenummer: 16707158.8
(22) Anmeldetag: 02.03.2016
(51) Int. Cl.: B26D 7/32, B65G 47/08, B65B 25/06, B65B 57/14, B65B 35/44, B65B 35/54, B26D 5/00, B65B 5/06, B65B 35/50

(54) **VERFAHREN UND VORRICHTUNG ZUR VERMEIDUNG VON LEERPACKUNGEN**
METHOD AND DEVICE FOR PREVENTING EMPTY PACKAGES
PROCÉDÉ ET DISPOSITIF POUR ÉVITER DES EMBALLAGES VIDES

(30) Priorität: 10.03.2015 DE 102015204271
(43) Veröffentlichungstag der Anmeldung: 17.01.2018
(73) Patentinhaber: GEA Food Solutions Germany GmbH, 35216 Biedenkopf-Wallau (DE)
(72) Erfinder: STRANZKE, Günter, 87471 Durach (DE)
(74) Vertreter: Kutzenberger Wolff & Partner
(86) Internationale Anmeldenummer: PCT/EP2016/054402
(87) Internationale Veröffentlichungsnummer: WO 2016/142231

(56) Entgegenhaltungen:
- EP-A1- 2 420 365
- EP-A1- 2 679 356
- DE-A1-102010 034 676

## Beschreibung

Die vorliegende Erfindung betrifft ein Verfahren und eine Vorrichtung zum Aufschneiden von mehreren Lebensmittelprodukten gleichzeitig, insbesondere Wurst, Schinken und/oder Käse, wobei für jedes Lebensmittelprodukt jeweils eine Spur vorgesehen ist, entlang derer es in Richtung eines sich bewegenden Messers transportiert wird, das von dem vorderen Ende des Lebensmittelprodukts Lebensmittelscheiben abtrennt, wobei die abgeschnittenen Lebensmittelscheiben anschließend verpackt werden.

Derartige Vorrichtungen sind aus dem Stand der Technik hinlänglich bekannt. Da die Lebensmittelprodukte in der Regel unterschiedlich schnell aufgeschnitten werden und/oder unterschiedlich lang sind, kommt es öfters vor, dass eine Produktzeile nicht vollständig ist, was zu unerwünschten leeren Verpackungen führt. Die DE 10 2010 034 676 A1 schlägt vor derartige unvollständige Produktzeilen aus dem Prozess auszuschleusen, in einer Parallellinie zu vervollständigen und dann wieder in den Prozess einzuschleusen. Diese Lösung ist jedoch apparativ sehr aufwändig und verbraucht viel Platz. Ein Verfahren und eine Vorrichtung gemäß dem Oberbegriff des unabhängigen Anspruchs 1 bzw. 6 ist bekannt aus der Europäischen Patentanmeldung EP 2 769 356 A1.

Es war deshalb die Aufgabe der vorliegenden Erfindung, ein Verfahren und eine Vorrichtung zur Verfügung zu stellen, welche die Nachteile des Standes der Technik nicht aufweisen. Gelöst wird die Aufgabe mit Verfahren zur Vermeidung von leeren Verpackungen bei dem n ≥ 2 Lebensmittelprodukte mit einer Aufschneidevorrichtung (15) zumindest zeitweise gleichzeitig in m Portionen, jeweils bestehend aus mindestens einer Lebensmittelscheibe, aufgeschnitten und nebeneinander vorzugsweise auf einem Ablagetisch in m Positionen zu einer Produktzeile abgelegt und entlang ihrer jeweiligen Förderspur in Richtung einer Verpackungsmaschine transportiert werden, wo die Portionen in eine Verpackung eingefüllt werden, wobei die Portionen einer Produktzeile voneinander beabstandet sind und wobei eine Produktzeile unvollständig sein kann, beispielsweise weil die Lebensmittelprodukte unterschiedlich schnell aufgeschnitten werden und/oder die Lebensmittelprodukte unterschiedlich lang sind, wobei bei einer unvollständigen Produktzeile deren Portionen aus der jeweiligen Förderspur heraus in eine für mindesten zwei Förderspuren identische Vorverteilposition transportiert und von dort auf mindesten zwei Einlegespuren verteilt wird. Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft ein Verfahren zur Vermeidung von leeren Verpackungen für Lebensmittelprodukte, insbesondere Lebensmittelprodukte, wie beispielsweise Wurst, (Roh-) Schinken und/oder Käse. Bei dem erfindungsgemäßen Verfahren werden mehrere, d.h. n ≥ 2 Lebensmittelprodukte zumindest zeitweise gleichzeitig mit einer oder mehreren Aufschneidevorrichtungen aufgeschnitten und zu mehreren Portionen einer Produktzeile konfiguriert. Eine Portion besteht jeweils aus mindestens einer Lebensmittelscheibe und in der Regel entsprechen die Portionen einer Produktzeile. Die Aufschneidevorrichtungen werden von dem Fachmann als "Slicer" oder "Hochleistungsslicer" bezeichnet. Diese Aufschneidevorrichtungen sind aus dem Stand der Technik hinlänglich bekannt und weisen ein sich bewegendes, insbesondere drehendes, Schneidmesser auf, das von dem vorderen Ende eines Lebensmittelproduktes Lebensmittelscheiben abschneidet. Dabei dreht sich das Schneidmesser mit bis zu 1.000 Umdrehungen pro Minute und mehr und/oder wirkt mit einer Schneidkante zusammen, die beispielsweise am vorderen Ende einer Produktauflage vorgesehen ist und die gemeinsam mit dem Messer die Schneidebene definiert, in der Lebensmittelscheiben von dem Lebensmittelprodukt abgetrennt werden. Zwischen dem Schneidmesser und der Schneidleiste befindet sich ein Schneidspalt, der so klein wie möglich sein sollte, um ein "Abhacken" von Teilen des Lebensmittelproduktes zu verhindern. Der Schneidspalt muss aber so groß sein, dass das Messer die Schneidkante möglichst nicht berührt. Beim Aufschneiden wird das Lebensmittelprodukt kontinuierlich oder intermittierend in Richtung des Schneidmessers transportiert. Nachdem eine Scheibe von dem jeweiligen Lebensmittelprodukt abgeschnitten worden ist, gelangt das Schneidmesser außer Eingriff mit dem jeweiligen Lebensmittelprodukt, um dann erneut in das Lebensmittelprodukt einzudringen und die nächste Lebensmittelscheibe abzuschneiden. Der Vorschub des jeweiligen Lebensmittelproduktes zwischen zwei Schnitten bestimmt die Dicke der jeweils abgeschnittenen Lebensmittelscheibe. Die abgeschnittenen Lebensmittelscheiben fallen beispielsweise auf einen Ablagetisch, auf dem sie zu Portionen zusammengefasst werden. Diese Portionen können beispielsweise Stapel oder Schindel oder dergleichen sein. Da mehrere Lebensmittelprodukte gleichzeitig aufgeschnitten werden, werden im Normalfall auch mehrere Portionen gleichzeitig auf dem Ablagetisch gebildet. Diese gleichzeitig gebildeten Portionen werden in der hiesigen Patentanmeldung als Produktzeile bezeichnet. Stehen nur noch n -≥ 1 Lebensmittelprodukte für den Aufschnitt zur Verfügung, wird auf dem Ablagetisch eine unvollständige Produktzeile gebildet. Sobald eine Produktzeile fertiggestellt ist, unabhängig davon, ob sie vollständig oder unvollständig ist, wird sie aus dem Abwurfbereich des Messers entfernt und der Aufschnitt einer neuen Produktzeile kann beginnen. Vorzugsweise ist die Aufschneidevorrichtung mehrspurig vorgesehen, d.h. dass mehrere Lebensmittelprodukte von einem Messer, insbesondere zumindest teilweise gleichzeitig oder zumindest teilweise sequentiell, aufgeschnitten werden. Dafür weist die Vorrichtung für jedes Lebensmittelprodukt eine eigene Spur auf, entlang derer es in Richtung des Messers transportiert wird.

Die aufgeschnittenen Lebensmittelportionen werden als Produktzeile mit m Portionen auf dem Ablagetisch der Aufschneidevorrichtung abgelegt, wobei die Portionen einer Produktzeile voneinander beabstandet sind. In der Regel entspricht die Anzahl der parallel aufzuschneidenden Produkte n auch der Anzahl m der Portionen einer Produktzeile. Bei einer vollständigen Produktzeile wird jede Portion einer Produktzeile dann entlang einer vorgegebenen Förderspur in Richtung der Verpackungsmaschine transportiert. Diese Förderspur kann gradlinig, geknickt und/oder gekrümmt sein. Die Förderspur einer Portion auf einer ganz bestimmten Position auf dem Ablagetisch kann für zwei aufeinander folgende Produktzeilen unterschiedlich sein, insbesondere wenn das Format der Produktzeile beim Aufschneiden nicht dem Format der Zeilen der Verpackungsmaschine, d.h. der Anzahl der Einlegespuren entspricht. Die jeweilige Förderspur mündet jeweils in eine Einlegespur, auf der die jeweilige Portion in die Verpackung eingelegt wird.

Für den Fall, dass nun eine Produktzeile unvollständig ist und damit die Bildung einer leeren Verpackung droht, insbesondere weil der Aufschnitt eines Lebensmittelprodukts vor dem anderen Aufschnitt des anderen beendet ist oder dass beispielsweise eine zweispurige Aufschneidevorrichtung nur einspurig betrieben wird, werden deren Portionen aus der jeweiligen Förderspur heraus in eine für mindesten zwei Förderspuren identische Vorverteilposition transportiert und von dort auf mindesten zwei Einlegespuren verteilt. Die Umlenkung der jeweiligen Portion auf die Vorverteilposition erfolgt vorzugsweise durch einen ersten Verteiler, der noch mehr bevorzugt stromabwärts, bezogen auf die Transportrichtung der Portionen von dem Ablagetisch vorgesehen ist. Die Verschiebung der jeweiligen Portion der unvollständigen Produktzeile kann aber auch mit dem Ablagetisch erfolgen, indem dieser so ausgebildet ist, dass er eine Bewegungskomponente quer zur Transportrichtung der Portionen in Richtung zu der Verpackungsmaschine vollführen kann.

Vorzugsweise wird die Vorverteilposition zwischen zwei Förderspuren, insbesondere im Wesentlichen mittig, angeordnet. Insbesondere die Mittenposition hat den Vorteil, dass die Bewegung eines Verteilers, der die Portionen von dort auf die Einlegespuren verteilt, vergleichsweise klein bzw. symmetrisch ausfallen kann.

Vorzugsweise wird jede Portion auf dem Weg zur Vorverteilposition in Richtung der Verpackungsmaschine transportiert.

Vorzugsweise wird die jeweilige Portion mit einem ersten Verteiler in die Vorverteilposition gebracht.

Ein Verteiler ist ein Förderaggregat das zwei Wellen aufweist, von denen mindestens eine angetrieben ist. Um diese Wellen läuft mindestens ein Endlosband um, das die Portionen transportiert. Mindestens eine der beiden Wellen ist quer zu den Transportbändern verschieblich vorgesehen, wodurch die Portionen nicht nur gerade sondern auch quer zu ihrer Transportrichtung transportiert werden können. Alternativ oder zusätzlich kann auch das Endlosband relativ zu einer oder beiden Wellen verschoben werden und oder das gesamte Förderaggregat kann translatorisch und/oder rotatorisch bewegt werden. Bei dem ersten Verteiler ist vorzugsweise zumindest die stromabwärtige Welle querverschieblich gelagert und/oder das stromabwärtige Ende des Transportbandes relativ zu der Welle verschieblich vorgesehen und/oder der gesamte Verteiler wird entsprechend verschoben und/oder gedreht. Der erste Verteiler nimmt die Portionen in ihrer jeweiligen Position, insbesondere auf dem Ablagetisch der Aufschneidevorrichtung auf und transportiert sie bei einer vollständigen Produktzeile entlang der vorgegebenen Förderspur. Bei einer unvollständigen Produktzeile überführt der erste Verteiler die jeweilige Portion dieser unvollständigen Produktzeile in die Vorverteilposition, die sich am stromabwärtigen Ende des ersten Verteilers befindet.

Vorzugsweise verteilt ein zweiter Verteiler die Portionen von der Vorverteilposition auf die Einlegespuren. Bezüglich des zweiten Verteilers kann im Wesentlichen zu den Ausführungen zu dem ersten Verteiler Bezug genommen werden. Vorzugsweise ist der zweite Verteiler stromabwärts von dem ersten Verteiler vorgesehen. Bei einer vollständigen Produktzeile übernimmt der zweite Verteiler die Portionen auf ihrer jeweiligen festgelegten Förderspur und transportiert sie zu der jeweiligen Einlegespur. Bei einer unvollständigen Produktzeile übernimmt der zweite Verteiler jede Portion in der Vorverteilposition und verteilt auf die jeweiligen Einlegepositionen. Dadurch, dass der zweite Verteiler die Portionen bei den unvollständigen Portionszeilen an der Vorverteilposition übernimmt, ist der maximale Weg, für den dieser Verteiler ausgelegt sein muss, reduziert. Folglich werden die Endlosbänder des Verteilers nicht überstrapaziert und die Zeit, die für die Verteilung benötigt wird, ist reduziert.

Vorzugsweise ist stromabwärts von dem zweiten Verteiler ein Einleger vorgesehen, der die Portionen in Verpackungen einlegt.

Bei ungeradzahligen Restportionen bleibt in der Regel immer eine Portion übrig. Diese kann beispielsweise in eine Korrekturebene ausgeschieden werden oder in einem Zwischenpuffer zwischengelagert werden. Sobald dann die nächste oder die nächsten Restportionen ankommen, kann die ausgeschleuste oder zwischengelagerte Portion wieder eingeschleust werden.

Ein weiterer Gegenstand der vorliegenden Erfindung ist eine Linie zum Aufschneiden und Verpacken von Lebensmittelscheiben, wobei n ≥ 2 Lebensmittelprodukte, insbesondere Wurst, (Roh-)Schinken und/oder Käse, mit einer Aufschneidevorrichtung zumindest teilweise gleichzeitig aufgeschnitten werden, wobei eine Spur für jedes Lebensmittelprodukt vorgesehen ist, entlang derer es in Richtung eines sich bewegenden Messers transportiert wird, das von dem vorderen Ende des Lebensmittelprodukts Lebensmittelscheiben abtrennt, und diese auf einem Ablagetisch zu einer Produktzeile mit m Portionen, jeweils bestehend aus mindestens einer Lebensmittelscheiben konfiguriert und die einen ersten Verteiler aufweist, der die Portionen entlang einer Förderspur in Richtung einer Verpackungsmaschine transportiert wo sie in Verpackungen eingelegt werden und wobei stromabwärts von einem ersten Verteiler ein zweiter Verteiler vorgesehen ist und bei einer unvollständigen Produktzeile der erste Verteiler deren Portion in eine Vorverteilerposition umlenkt und der zweite Verteiler diese Portion von dort auf mindestens zwei unterschiedliche Einlegespuren verteilt.

Die zu diesem Gegenstand der vorliegenden Erfindung gemachten Ausführungen gelten für das erfindungsgemäße Verfahren gleichermaßen und umgekehrt.

Erfindungsgemäß weist die Linie mindestens eine Aufschneidevorrichtung auf, die mehrere Lebensmittelprodukte in mehreren Spuren in Lebensmittelscheiben zerschneidet. Die aufgeschnittenen Lebensmittelscheiben werden zu m Portionen konfiguriert, wobei m≥2 ist und die eine sogenannte Produktzeile darstellen. Die Anzahl der Portionen in der Produktzeile kann mit der Anzahl der Verpackungen in einer Zeile, in die die Portionen jeweils, insbesondere gleichzeitig eingelegt werden übereinstimmen oder nicht. Für den Fall, dass die Produktzeile vollständig aufgeschnitten wurde, werden die Portionen von dem ersten und zweiten Verteiler entlang einer vorgegebenen Förderspur in Richtung der Verpackungsmaschine transportiert. Diese Förderspur kann für zwei aufeinanderfolgende Produktzeilen zumindest abschnittsweise unterschiedlich sein. Sobald die Portionen der jeweiligen Produktzeile ihre Einlegeposition erreicht haben und wenn die Einlegezeile vollständig ist, werden die Portionen beispielsweise von einem Einleger, beispielsweise einem Rückzugsband in die Verpackungen eingelegt.

Ermittelt nun beispielsweise ein Sensor, dass die Produktzeile nicht vollständig ist, lenkt der erste Verteiler jede Portion dieser unvollständigen Produktzeile in eine Vorverteilposition ab, die sich vorzugsweise am stromabwärtigen Ende des ersten Verteilers befindet und besonders bevorzugt in der Mitte von dessen Transportband, bezogen auf dessen Erstreckung quer zur Transportrichtung. Dort nimmt der zweite Verteiler diese Portionen auf und verteilt sie auf die Einlegespuren des Einlegers. Wenn alle Einlegespuren mit einer Portion belegt sind, werden diese Portionen in die Zeile einer Verpackungsmaschine eingelegt. Dadurch werden Leerverpackungen vermieden.

Die Zeile einer Verpackungsmaschine ist die Anzahl an Verpackungen, die quer zur Transportrichtung der Verpackungen entlang der Verpackungsmaschine nebeneinander sind.

Vorzugsweise übernimmt der zweite Verteiler Portionen an m+1 Positionen. Neben den Förderspuren, entlang derer die Portionen bei einer vollständigen Produktzeile transportiert werden kommt zusätzlich die Vorverteilposition hinzu, die vorzugsweise, bezogen auf die Quererstreckung des Verteilers zwischen zwei Förderspuren, insbesondere mittig liegt.

Vorzugsweise weist die Linie einen Sensor auf, der eine unvollständige Produktzeile erkennt. Dabei kann es sich beispielsweise um eine Kamera handeln.

Vorzugsweise sind die beiden Verteiler hintereinander und vorzugsweise in einer Linie mit der Aufschneidevorrichtung vorgesehen. Die Produkte einer unvollständigen Produktzeile werden nicht aus der Linie in einen zur Linie parallelen Arbeitsbereich ausgeschleust, sondern in der Linie in Richtung der Verpackungsmaschine transportiert. Vorzugsweise weisen die Verteiler dieselbe Erstreckung quer ihrer Transportrichtung auf. Weiterhin bevorzugt sind die beiden Verteiler miteinander synchronisiert. Dies ist insbesondere bei der Übergabe der Portionen von einem Verteiler zu dem nächsten wichtig.

Im Folgenden wird die Erfindung anhand der Figuren 1 - 3 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Linie.
- **Figur 2**: zeigt ein erstes Beispiel des erfindungsgemäßen Verfahrens.
- **Figur 3**: zeigt ein zweites Beispiel des erfindungsgemäßen Verfahrens.

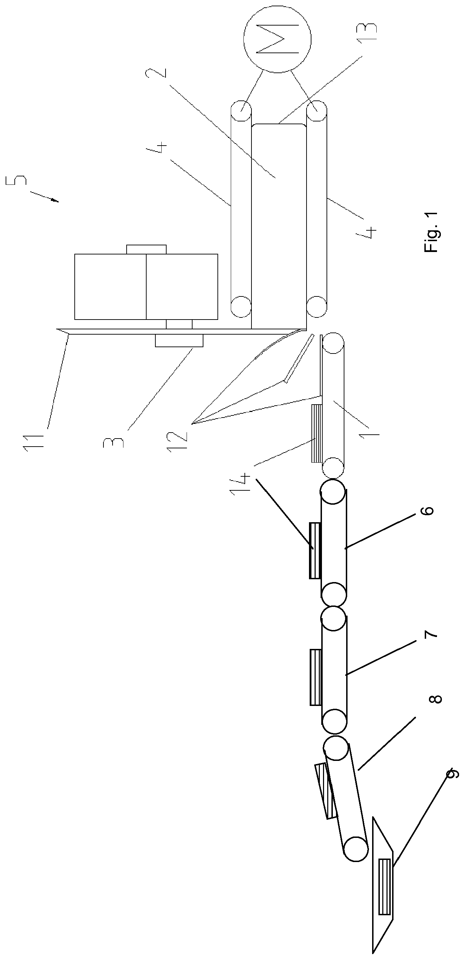

**Figur 1** zeigt erfindungsgemäße Linie mit einer Aufschneidevorrichtung 5, einem ersten Verteiler 6, einem zweiten Verteiler 7, einem Einleger 8 und einer Verpackungsmaschine. Die Aufschneidevorrichtung 5 weist ein Schneidmesser 11 auf, das ein Lebensmittelprodukt 2 in Lebensmittelscheiben 12 schneidet. Dazu wird jedes Lebensmittelprodukt 2 mit einem Fördermittel 4, hier zwei Förderbändern 4, kontinuierlich oder intermittierend in Richtung der Schneidebene 6 des Messers 11 transportiert. Das untere Förderband 4 ist gleichzeitig eine Produktauflage. Das Schneidmesser 11 ist an einer sich drehenden Messeraufnahme 3 befestigt und wirkt vorzugsweise mit einer Schneidkante schneidend zusammen, die beispielsweise am vorderen Ende einer Produktauflage 4 vorgesehen ist und die vorzugsweise gemeinsam die Schneidebene definieren. Zwischen dem Messer 11 und der Schneidkante ist ein sogenannter Schneidspalt vorhanden, der möglichst klein sein sollte, jedoch so groß sein muss, dass das Messer die Schneidkante nicht berührt. Dieser Spalt muss regelmäßig eingestellt werden. Dies kann durch eine Bewegung des Messers und/oder der Schneidkante erfolgen. Außerdem muss die Schneidkante parallel zu dem Messer ausgerichtet sein. Nach dem Abschneiden fallen die Lebensmittelscheiben in der Regel auf einen Ablagetisch 1, der mit Transportmitteln, beispielsweise einem Transportband oder Transportriemen, versehen ist, auf dem sie zu jeweils einer Portion 14, hier einem Stapel, konfiguriert werden. Die fertiggestellten Portionen 14 werden sodann aus dem Schneidmesserbereich abtransportiert und danach verpackt. Die Scheibenstärke ergibt sich aus der Vorschubstrecke des Lebensmittelproduktes zwischen zwei Schnitten. Bei konstanter Messerdrehgeschwindigkeit erfolgt die Regelung der Scheibenstärke über die Vorschubgeschwindigkeit des Lebensmittelproduktes. Die Aufschneidevorrichtung kann pro Vorschubtrasse einen Greifer aufweisen, der das rückwärtige Ende 13 des Lebensmittelproduktes 2 vor oder während des Aufschneidens ergreift und dieses während des Aufschneidens, insbesondere gegen Ende des Aufschneidens, stabilisiert und das Endstück, das nicht aufgeschnitten werden kann, entsorgt. Jeder Greifer ist vorzugsweise an einem Greiferwagen (nicht dargestellt) vorgesehen, der die Greifer, insbesondere parallel zur Vorschubrichtung des Lebensmittelprodukts, vor- und zurückbewegt.

Vorzugsweise ist die Aufschneidevorrichtung mehrspurig vorgesehen, d.h. dass mehrere Lebensmittelprodukte 2 von einem Messer, insbesondere zumindest zeitweise gleichzeitig oder zumindest zeitweise sequentiell, aufgeschnitten werden. Dafür weist die Vorrichtung für jedes Lebensmittelprodukt eine eigene Spur 17 auf, entlang derer es in Richtung des Messers 11 transportiert wird. Die abgeschnittenen Lebensmittelscheiben werden jeweils zu Portionen konfiguriert. Portionen, die gleichzeitig aufgeschnitten werden, werden im Folgenden als Produktzeile bezeichnet. Diese Produktzeile kann vollständig sein, wenn alle zu einer Produktzeile gehörigen Portionen aufgeschnitten wurden. Eine Produktzeile kann aber auch unvollständig sein, wenn nicht alle zu einer vollständigen Produktzeile gehörigen Portionen aufgeschnitten wurden. Dies kann beispielsweise dann vorkommen, wenn ein Lebensmittelprodukt schneller aufgeschnitten wird und/oder wenn es kürzer ist als das Parallele.

Stromabwärts von dem Ablagetisch 1 ist hier ein erster Verteiler 6 vorgesehen, der die Portion(en) von dem Ablagetisch übernimmt und an einen zweiten Verteiler 7 übergibt. Beide Verteiler sind in dem vorliegenden Fall als Endlosbänder ausgeführt, die jeweils um zwei Wellen gespannt sind, von denen mindestens eine angetrieben ist. Vorzugsweise ist eine der beiden Wellen quer zur Transportrichtung der Portionen verschieblich vorgesehen Stromabwärts von dem zweiten Verteiler ist ein Einleger 8 vorgesehen, beispielsweise ein sogenanntes Rückzugsband, der jede Portion in eine Verpackung einlegt. Auf dem Einleger wird eine Einlegezeile gebildet, die, bezogen auf die Papierebene, nebeneinander so viele Portionen aufweise, wie es Verpackungen in einer Zeile gibt. Ist dies nicht der Fall, bleibt mindestens eine Verpackung leer, was unerwünscht ist.

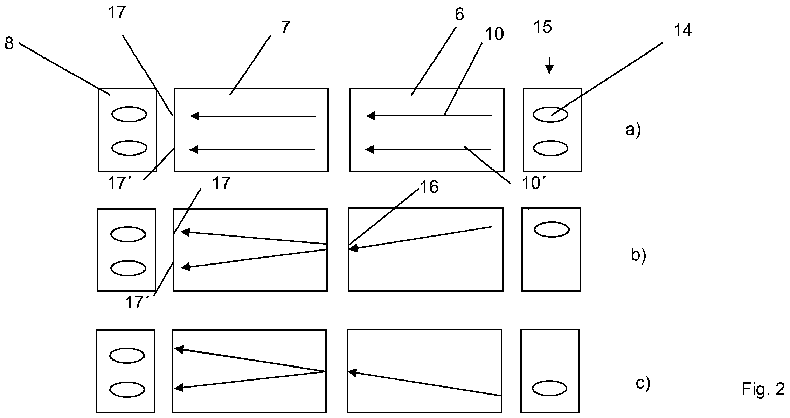

**Figur 2** zeigt eine erste Ausführungsform des erfindungsgemäßen Verfahrens bzw. der erfindungsgemäßen Vorrichtung. Dargestellt ist der Ablagetisch 1, der erste Verteiler 6, der zweite Verteiler 7 sowie der Einleger 8. Figur a) zeigt den normalen Betrieb der Linie, bei dem zwei Lebensmittelprodukte gleichzeitig aufgeschnitten werden, was auf dem Ablagetisch zu einer Produktzeile 15 mit zwei nebeneinander angeordneten Portionen n=2 führt. Sobald diese Produktzeile 15 vollständig aufgeschnitten ist, wird Diese an den ersten Verteiler 16 übergeben, der die beiden Portionen entlang der ersten Förderspur 10 bzw. der zweiten Förderspur 10' transportiert und an den zweiten Verteiler 7 übergibt, der die beiden Portionen zu den Einlegespuren 17, 17', die sich in dem vorliegenden Fall an dem stromabwärtigen Ende des zweiten Verteilers befinden, transportiert. Entlang dieser Einlegespuren werden die Portionen an den Einleger 8 übergeben, der die Portionen in zwei in einer Zeile nebeneinander angeordnete Verpackungen einlegt. Bei diesem Beispiel entspricht demnach die Produktzeile der Einlegezeile sowie der Zeile der Verpackung.

Figur b) zeigt den Fall einer unvollständigen Produktzeile 15, n<2, wobei in diesem Fall das linke Produkt vor dem rechten Produkt vollständig aufgeschnitten worden ist, so dass in der Produktzeile lediglich die rechte Portion vorhanden ist. In diesem Fall wird diese Portion nicht entlang der Förderspur 10 transportiert, sondern aus ihrer Position in Richtung einer Vorverteilposition 16, die sich am stromabwärtigen Ende des ersten Verteilers befindet, abgelenkt. Die Position 17 befindet sich mittig bezogen auf die Quererstreckung des ersten Verteilers. Von dieser Vorverteilposition ausgehend, verteilt der zweite Verteiler 7 die dort ankommenden Positionen auf die beiden Einlegespuren 17, 17', so dass, obwohl die Produktzeile unvollständig ist, trotzdem eine vollständige Einlegezeile auf dem Einleger 8 realisiert wird, so dass keine Leerverpackungen entstehen. Die Vorverteilung einer Portion aus einer unvollständigen Produktzeile in eine Position 16, die sich zwischen den beiden Förderspuren 10, 10' befindet, hat den Vorteil, dass die Auslenkung, die der zweite Verteiler vollführen muss, um diese Portionen auf alle Einlegespuren zu verteilen, reduziert werden kann. Dadurch wird der zweite Einleger 7, insbesondere dessen Transportband, weniger beansprucht und es wird Zeit eingespart.

Figur c) zeigt eine weitere Möglichkeit einer unvollständigen Produktzeile 15. In dem vorliegenden Fall ist das rechte Produkt vor dem linken aufgeschnitten, so dass die unvollständige Produktzeile 15 in dem vorliegenden Fall nur eine linke Portion aufweist. Auch Diese wird mit dem zweiten Verteiler aus ihrer Förderspur 10' in Richtung der Übergabeposition 16 abgelenkt. Ansonsten wird auf die Ausführung zu Figur 2b) verwiesen.

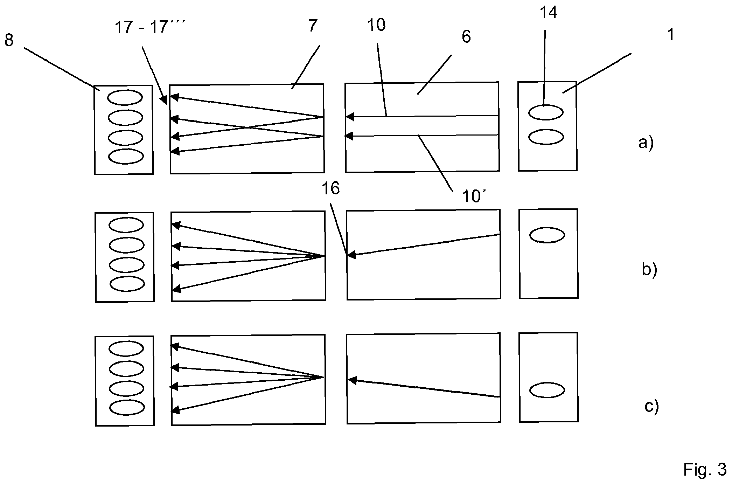

**Figur 3** zeigt ein Ausführungsbeispiel, bei dem die Produktzeile 15 nicht mit der Anzahl der Einlegespuren übereinstimmt. In dem vorliegenden Fall werden pro Produktzeile lediglich zwei Portionen aufgeschnitten. Diese zwei Portionen müssen dann auf vier Einlegespuren 17 bis 17"' aufgeteilt werden. Die beiden Portionen 14 der Produktzeile werden bei normalem Betrieb der Linie wiederum in zwei Förderspuren 10, 10' entlang des ersten Verteilers 6 transportiert und an den zweiten Verteiler übergeben. Der zweite Verteiler verteilt diese beiden Portionen auf die beiden rechten bzw. die beiden linken Einlegespuren. Sobald die Einlegezeile, die in dem vorliegenden Fall aus vier Portionen besteht, fertiggestellt wird, wird Diese in Verpackungen, beispielsweise vier Verpackungen, eingelegt, die in einer Zeile vorgesehen sind.

Figur b) zeigt wiederum eine nicht vollständige Produktzeile, wobei auf die zu Figur 2 b) gemachten Ausführungen verwiesen wird. Wiederum wird diese Portion nicht entlang ihrer konventionellen Förderspur 10, 10' von dem ersten Verteiler 6 transportiert, sondern in Richtung der Vorverteilposition 16 abgelenkt, in der sie an den zweiten Verteiler 7 übergeben wird, der in dem vorliegenden Fall diese Portionen auf vier Einlegespuren 17 bis 17"' verteilt. Insbesondere in diesem Fall ist die Ablenkung der Portionen 14 in die Vorverteilposition 16 wichtig, weil dadurch der zurückzulegende Weg insbesondere einiger Positionen erheblich reduziert wird.

Figur c) zeigt wiederum eine unvollständige Produktzeile 15, wobei auf die Ausführungen zu Figur 2 c) bzw. zu Figur 3 b) Bezug genommen werden kann.

### Bezugszeichenliste:

- 1: Ablagetisch
- 2: Lebensmittelprodukt
- 3: Messeraufnahme
- 4: Auflagefläche
- 5: Aufschneidevorrichtung
- 6: Erster Verteiler, Vorverteiler
- 7: zweiter Verteiler, Linienverteiler
- 8: Einleger
- 9: Verpackung
- 10: erste Förderspur
- 10': zweite Förderspur
- 11: Messer, Schneidmesser, Kreismesser, Sichelmesser
- 12: Lebensmittelscheiben
- 13: Hinteres Ende des Lebensmittelprodukts
- 14: Portion, Lebensmittelportion, bestehend aus mehreren Scheiben
- 15: Produktzeile
- 16: Vorverteilposition, Mittenposition
- 17: Einlegespur
- 17': Einlegespur
- 17": Einlegespur
- 17"': Einlegespur

## Patentansprüche

1. Verfahren zur Vermeidung von leeren Verpackungen (14) bei dem n ≥ 2 Lebensmittelprodukte (2) mit einer Aufschneidevorrichtung (15) zumindest zeitweise gleichzeitig in m Portionen (14) jeweils bestehend aus mindestens einer Lebensmittelscheibe (12) aufgeschnitten und nebeneinander vorzugsweise auf einem Ablagetisch (1) in m Positionen zu einer Produktzeile (15) abgelegt und entlang ihrer jeweiligen Förderspur (10, 10') in Richtung einer Verpackungsmaschine transportiert werden, wo die Portionen (14) in eine Verpackung (9) eingefüllt werden, wobei die Portionen einer Zeile voneinander beabstandet sind und wobei m < n sein kann, beispielsweise weil die Lebensmittelprodukte unterschiedlich schnell aufgeschnitten werden und/oder die Lebensmittelprodukte unterschiedlich lang sind, **dadurch gekennzeichnet, dass** bei einer unvollständigen Produktzeile deren Portionen aus der jeweiligen Förderspur heraus in eine für mindesten zwei Förderspuren identische Vorverteilposition (16) transportiert und von dort auf mindesten zwei Einlegespuren (17, 17') verteilt wird.

2. Verfahren nach Anspruch 1, **dadurch gekennzeichnet, dass** die Vorverteilposition (16) zwischen zwei Förderspuren, insbesondere im Wesentlichen mittig, angeordnet wird.

3. Verfahren nach einem der voranstehenden Ansprüche, **dadurch gekennzeichnet**, das die Portionen auf dem Weg zur Vorverteilposition in Richtung der Verpackungsmaschine transportiert wird.

4. Verfahren nach einem der voranstehenden Ansprüche, **dadurch gekennzeichnet, dass** die jeweilige Portion mit einem ersten Verteiler (6) in die Vorverteilposition gebracht wird.

5. Verfahren nach einem der voranstehenden Ansprüche, **dadurch gekennzeichnet, dass** ein zweiter Verteiler die Portionen (14) von der Vorverteilposition auf die Einlegespuren verteilt.

6. Linie zum Aufschneiden und Verpacken von Lebensmittelscheiben, wobei n ≥ 2 Lebensmittelprodukte (2), insbesondere Wurst, (Roh-) Schinken und/oder Käse, mit einer Aufschneidevorrichtung zumindest teilweise gleichzeitig aufgeschnitten werden, wobei eine Spur (7) für jedes Lebensmittelprodukt vorgesehen ist, entlang derer es in Richtung eines sich bewegenden Messers (11) transportiert wird, das von dem vorderen Ende des Lebensmittelprodukts Lebensmittelscheiben (12) abtrennt, und diese auf einem Ablagetisch (1) in m Portion (14) jeweils bestehend aus mindestens einer Lebensmittelscheiben konfiguriert und die einen ersten Verteiler (6) aufweist, der die Portionen entlang einer Förderspur (10, 10') in Richtung einer Verpackungsmaschine transportiert wo sie in Verpackungen eingelegt werden **dadurch gekennzeichnet, dass** stromabwärts von einem ersten Verteiler ein zweiter Verteiler (7) vorgesehen ist und bei einer unvollständigen Produktzeile der erste Verteiler deren Portion in eine Vorverteilerposition (16) umlenkt und der zweite Verteiler diese Portion von dort auf mindestens zwei unterschiedliche Einlegespuren (17 - 17"') verteilt.

7. Linie nach Anspruch 6, **dadurch gekennzeichnet, dass** der zweite Verteiler Portionen an m+1 Positionen übernimmt.

8. Linie nach einem der Ansprüche 6 oder 7, **dadurch gekennzeichnet, dass** sie einen Sensor aufweist, der eine unvollständige Produktzeile erkennt.

9. Linie nach einem der Ansprüche 6 . 8, **dadurch gekennzeichnet**, die beiden Verteiler (6, 7) hintereinander und vorzugsweise in einer Linie mit der Aufschneidevorrichtung vorgesehen sind.

## Claims

1. Method for preventing empty packages (14), in which n ≥ 2 food products (2) are sliced at least at times simultaneously with a slicing device (15) into m portions (14) each consisting of at least one food slice (12) and are deposited next to one another, preferably on a delivery tray (1), in m positions to form a product line (15) and are transported along their respective conveying track (10, 10') in the direction of a packaging machine where the portions (14) are placed into a package (9), wherein the portions of a line are spaced apart from one another, and wherein it is possible for m < n, for example because the food products are sliced at different speeds and/or the food products differ in length, **characterized in that**, in the event of an incomplete product line, the portions thereof are transported out of the respective conveying track into a pre-distribution position (16), which is identical for at least two conveying tracks, and distributed from there to at least two insertion tracks (17, 17').

2. Method according to Claim 1, **characterized in that** the pre-distribution position (16) is arranged, in particular substantially centrally, between two conveying tracks.

3. Method according to either of the preceding claims, **characterized in that** the portions on the way to the pre-distribution position are transported in the direction of the packaging machine.

4. Method according to one of the preceding claims, **characterized in that** the respective portion is brought by a first distributor (6) into the pre-distribution position.

5. Method according to one of the preceding claims, **characterized in that** a second distributor distributes the portions (14) from the pre-distribution position to the insertion tracks.

6. Line for slicing and packaging food slices, wherein n ≥ 2 food products (2), in particular sausage, (raw) ham and/or cheese, are sliced at least partially simultaneously with a slicing device, wherein each food product is provided with a track (7) along which said food product is transported in the direction of a moving blade (11) which cuts off food slices (12) from the front end of the food product and configures said food slices on a delivery tray (1) in m portions (14) each consisting of at least one food slice, and which track has a first distributor (6) which transports the portions along a conveying track (10, 10') in the direction of a packaging machine where they are placed into packages, **characterized in that** a second distributor (7) is provided downstream of a first distributor and, in the event of an incomplete product line, the first distributor deflects the portions thereof into a pre-distribution position (16) and the second distributor distributes said portions from there to at least two different insertion tracks (17-17"').

7. Line according to Claim 6, **characterized in that** the second distributor takes over portions at m + 1 positions.

8. Line according to either of Claims 6 and 7, **characterized in that** it has a sensor which identifies an incomplete product line.

9. Line according to one of Claims 6 to 8, **characterized in that** the two distributors (6, 7) are provided consecutively and preferably in a line with the slicing device.

## Revendications

1. Procédé pour éviter des emballages (14) vides, avec lequel n ≥ 2 produits alimentaires (2) sont découpés avec un dispositif de découpage (15) au moins temporairement simultanément en m portions (14) composées respectivement d'au moins une tranche de produit alimentaire (12) et déposés les uns à côté des autres, de préférence sur une table de réception (1) en m positions pour former une ligne de produits (15) et sont transportés le long de leur voie de convoyage (10, 10') respective en direction d'une emballeuse, où les portions (14) sont versées dans un emballage (9), les portions d'une ligne étant espacées les unes des autres et m pouvant être inférieur à n, par exemple parce que les produits alimentaires sont découpés à des vitesses différentes et/ou les produits alimentaires ont des longueurs différentes, **caractérisé en ce qu'**en présence d'une ligne de produits incomplète, leurs portions sont transportées hors de la voie de convoyage respective dans une position de pré-distribution (16) identique pour au moins deux voies de convoyage et, de là, distribuées sur au moins deux voies d'introduction (17, 17').

2. Procédé selon la revendication 1, **caractérisé en ce que** la position de pré-distribution (16) est disposée entre deux voies de convoyage, notamment sensiblement au centre.

3. Procédé selon l'une des revendications précédentes, **caractérisé en ce que** les portions sont transportées en direction de l'emballeuse sur le trajet vers la position de pré-distribution.

4. Procédé selon l'une des revendications précédentes, **caractérisé en ce que** la portion respective est amenée dans la position de pré-distribution avec un premier distributeur (6).

5. Procédé selon l'une des revendications précédentes, **caractérisé en ce qu'**un deuxième distributeur distribue les portions (14) de la position de pré-distribution sur les voies d'introduction.

6. Ligne de découpage et d'emballage de tranches de produit alimentaire, n ≥ 2 produits alimentaires (2), notamment de la saucisse, du jambon (cru) et/ou du fromage, étant notamment découpés avec un dispositif de découpage au moins partiellement simultanément, une voie (7) étant présente pour chaque produit alimentaire, le long de laquelle il est transporté en direction d'un couteau (11) qui se déplace, lequel sépare des tranches de produit alimentaire (12) de l'extrémité avant du produit alimentaire, et configure celles-ci sur une table de réception (1) en m portions (14) respectivement composées d'au moins une tranche de produit alimentaire et qui possède un premier distributeur (6) qui transporte les portions le long d'une voie de convoyage (10, 10') en direction d'une emballeuse, où elles sont versées dans des emballages, **caractérisée en ce qu'**un deuxième distributeur (7) se trouve en aval du premier distributeur et, en présence d'une ligne de produits incomplète, le premier distributeur dévie ses portions dans une position de pré-distribution (16) et, de là, le deuxième distributeur distribue ces portions sur au moins deux voies d'introduction (17-17"') différentes.

7. Ligne selon la revendication 6, **caractérisée en ce que** le deuxième distributeur prend en charge les portions à m+1 positions.

8. Ligne selon l'une des revendications 6 ou 7, **caractérisée en ce qu'**elle possède un capteur qui reconnaît une ligne de produit incomplète.

9. Ligne selon l'une des revendications 6 à 8, **caractérisée en ce que** les deux distributeurs (6, 7) sont disposés l'un derrière l'autre et de préférence dans une ligne comprenant le dispositif de découpage.
